# EUROPEAN PATENT APPLICATION

(11) **EP 4 589 531 A1**
(43) Date of publication of application: **23.07.2025**
(21) Application number: 23864760.6
(22) Date of filing: 14.09.2023
(51) Int. Cl.: G06T 7/55

(54) **IMAGE DEPTH ESTIMATION METHOD AND APPARATUS, ELECTRONIC DEVICE AND STORAGE MEDIUM**

(30) Priority: 14.09.2022 CN 202211114979
(71) Applicant: Beijing Zitiao Network Technology Co., Ltd., Beijing 100190 (CN)
(72) Inventor: WANG, Guangwei, Beijing 100028 (CN)
(74) Representative: Dentons UK and Middle East LLP
(86) International application number: PCT/CN2023/118825
(87) International publication number: WO 2024/056030

(57) **Abstract**

Embodiments of the present disclosure disclose an image depth estimation method and apparatus, an electronic device, and a storage medium. The method includes: obtaining relative depth values of a plurality of pixels in a binocular image; obtaining a bidirectional disparity of a same scene point in the binocular image, and determining a target region in which the bidirectional disparity is consistent; determining an absolute depth value of a pixel in the target region based on a bidirectional disparity of the pixel in the target region; constructing a mapping relationship between a relative depth value and an absolute depth value based on the absolute depth value of the pixel in the target region and a relative depth value of the pixel in the binocular image; and determining, based on the mapping relationship and a relative depth value of a pixel to be determined in the binocular image, an absolute depth value of the pixel to be determined in the binocular image.

## Description

The present application claims priority to Chinese Patent Application No. 202211114979.6, filed with the China National Intellectual Property Administration on September 14, 2022, which is incorporated herein by reference in its entirety.

### FIELD

Embodiments of the present disclosure relate to the field of image processing technologies, for example, to an image depth estimation method and apparatus, an electronic device, and a storage medium.

### BACKGROUND

Image depth estimation methods in the related art include a binocular ranging method. The principle of binocular ranging includes: performing matching between feature points extracted from a binocular image (i.e., a left-eye image and a right-eye image), and determining depths of the feature points in the binocular image using a pre-calibrated parameter of a binocular image acquisition device and respective pixel positions of the matched feature points in the binocular image. However, in this method, depth estimation can be performed only on an image portion with prominent feature points, and a depth of a portion with non-prominent feature points cannot be determined.

### SUMMARY

Embodiments of the present disclosure provide an image depth estimation method and apparatus, an electronic device, and a storage medium, so as to implement depth estimation for a plurality of portions of a whole image.

According to a first aspect, an embodiment of the present disclosure provides an image depth estimation method, including:
obtaining relative depth values of a plurality of pixels in a binocular image;
obtaining a bidirectional disparity of a same scene point in the binocular image, and determining a target region in which the bidirectional disparity is consistent;
determining an absolute depth value of a pixel in the target region based on a bidirectional disparity of the pixel in the target region;
constructing a mapping relationship between a relative depth value and an absolute depth value based on the absolute depth value of the pixel in the target region and a relative depth value of the pixel in the binocular image; and
determining, based on the mapping relationship and a relative depth value of a pixel to be determined in the binocular image, an absolute depth value of the pixel to be determined in the binocular image.

According to a second aspect, an embodiment of the present disclosure further provides an image depth estimation apparatus, including:
a relative depth obtaining module configured to obtain relative depth values of a plurality of pixels in a binocular image;
a target region determining module configured to obtain a bidirectional disparity of a same scene point in the binocular image, and determine a target region in which the bidirectional disparity is consistent;
a regional absolute depth determining module configured to determine an absolute depth value of a pixel in the target region based on a bidirectional disparity of the pixel in the target region;
a mapping relationship construction module configured to construct a mapping relationship between a relative depth value and an absolute depth value based on the absolute depth value of the pixel in the target region and a relative depth value of the pixel in the binocular image; and
a global absolute depth determining module configured to determine, based on the mapping relationship and a relative depth value of a pixel to be determined in the binocular image, an absolute depth value of the pixel to be determined in the binocular image.

According to a third aspect, an embodiment of the present disclosure further provides an electronic device, including:
at least one processor; and
a storage apparatus configured to store at least one program, where
the at least one program, when executed by the at least one processor, causes the at least one processor to implement the image depth estimation method described in any one of the embodiments of the present disclosure.

According to a fourth aspect, an embodiment of the present disclosure further provides a storage medium including computer-executable instructions that, when executed by a computer processor, cause the image depth estimation method described in any one of the embodiments of the present disclosure to be performed.

### BRIEF DESCRIPTION OF THE DRAWINGS

FIG. 1 is a schematic flowchart of an image depth estimation method according to an embodiment of the present disclosure;
FIG. 2 is a schematic flowchart of an image depth estimation method according to an embodiment of the present disclosure;
FIG. 3 is a schematic diagram of a structure of an image depth estimation apparatus according to an embodiment of the present disclosure; and
FIG. 4 is a schematic diagram of a structure of an electronic device according to an embodiment of the present disclosure.

### DETAILED DESCRIPTION OF EMBODIMENTS

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "at least one".

It can be understood that the data involved in the technical solutions (including, but not limited to, the data itself and the access to or use of the data) shall comply with the requirements of corresponding laws, regulations, and relevant provisions.

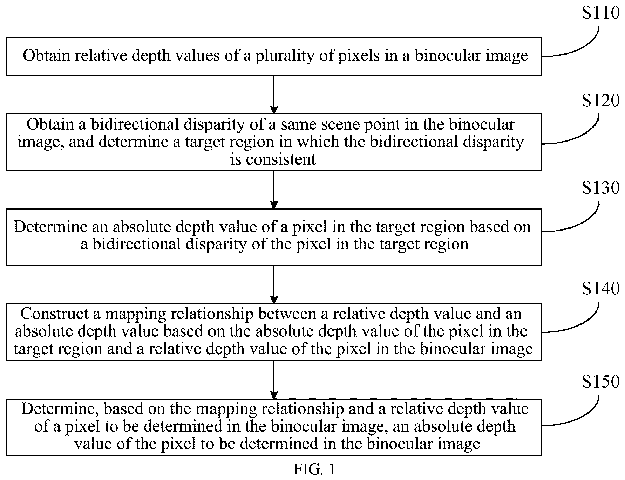

FIG. 1 is a schematic flowchart of an image depth estimation method according to an embodiment of the present disclosure. This embodiment of the present disclosure is applicable to a case of whole-image depth estimation for a binocular image. The method may be performed by an image depth estimation apparatus. The apparatus may be implemented in the form of at least one of software and hardware, and may be configured in an electronic device, for example, in a computer.

As shown in FIG. 1, the image depth estimation method provided in this embodiment includes the following steps.

S110: Obtain relative depth values of a plurality of pixels in a binocular image.

In this embodiment of the present disclosure, the relative depth values of the plurality of pixels in the binocular image may be predetermined and stored in a preset storage space, and the relative depth values of the plurality of pixels in the binocular image may be read directly from the preset storage space. In addition, the relative depth values of the plurality of pixels in the binocular image may alternatively be determined in real time by obtaining and then processing the binocular image. The relative depth values of the plurality of pixels in the binocular image may be obtained by reading from the preset storage space, determining in real time, or other optional methods.

The binocular image may include a left-eye image and a right-eye image. Depth estimation may be separately performed on a plurality of pixels in the left-eye image and a plurality of pixels in the right-eye image using an existing monocular image depth estimation method, such as a conventional cue-based method, a conventional machine learning-based method, and a supervised or unsupervised depth learning-based method, to determine relative depth values of the plurality of pixels in the left-eye image and the right-eye image, i.e., to determine the relative depth values of the plurality of pixels in the binocular image.

Relative distances of a plurality of pixels in an image can be completely estimated using the existing monocular image depth estimation method, that is, relative depth values of all pixels in the image can be obtained. However, the relative depth values do not include scale information, that is, a distance between an object corresponding to the pixels and an image acquisition apparatus cannot be determined.

S120: Obtain a bidirectional disparity of a same scene point in the binocular image, and determine a target region in which the bidirectional disparity is consistent.

In this embodiment of the present disclosure, a scene is an actual scene corresponding to the binocular image, and a point in the scene may be projected to each of the left-eye image and the right-eye image. In other words, there is a pixel in each of the left-eye image and the right-eye image, and the two pixels represent the same scene point. The bidirectional disparity of the same scene point in the binocular image may include: an offset distance of a scene point in the left-eye image relative to the same scene point in the right-eye image in image coordinates, and an offset distance of a scene point in the right-eye image relative to the same scene point in the left-eye image in the image coordinates.

The offset distance of the scene point in the left-eye image relative to the same scene point in the right-eye image in the image coordinates may be understood as an offset distance from a projection point of the same scene point in the left-eye image to a projection point in the right-eye image, where the left-eye image is used as a reference image, and the right-eye image is used as a target image. Similarly, the offset distance of the scene point in the right-eye image relative to the same scene point in the left-eye image in the image coordinates may be understood as an offset distance from a projection point of the same scene point in the right-eye image to a projection point in the left-eye image, where the right-eye image is used as a reference image, and the left-eye image is used as a target image.

There is no strict sequential time order between step S120 and step S110, which may be performed simultaneously or randomly in sequence. In step S120, the bidirectional disparity of the same scene point in the binocular image may also be obtained by reading a predetermined bidirectional disparity from the preset storage space, determining in real time, or other optional methods.

Matching of the same scene point may be realized based on a matching algorithm such as a conventional scale-invariant feature transform (SIFT) algorithm and a speeded up robust features (SURF) algorithm, so that the bidirectional disparity of the same scene point in the binocular image can be determined based on positions of the same scene point in image coordinates of the binocular image. Alternatively, optical flow information of the same scene point in the binocular image may be determined using a conventional optical flow algorithm, deep learning-based optical flow estimation, or another method, and the optical flow information may be used as the bidirectional disparity of the same scene point in the binocular image.

After the bidirectional disparity of the same scene point in the binocular image is determined, each pixel may be displaced first based on a disparity from the left-eye image to the right-eye image, and then the pixel is displaced again based on a disparity from the right-eye image to the left-eye image. If the pixel returns to its original position or reaches a position very close to the original position after the two displacements, it may be considered that the bidirectional disparity of the pixel is consistent. The target region may be determined based on a plurality of pixels each having a consistent bidirectional disparity. For example, at least one connected component constituted by the plurality of pixels each having the consistent bidirectional disparity is used as the target region. For another example, a connected component, with a largest area, in at least one connected component may be used as the target region.

In some optional implementations, determining the target region in which the bidirectional disparity is consistent may further include: determining a target pixel based on the bidirectional disparity, where the bidirectional disparity includes a first disparity and a second disparity, the first disparity is a disparity of the same scene point from the left-eye image to the right-eye image, and the second disparity is a disparity of the same scene point from the right-eye image to the left-eye image; and determining the target region based on a plurality of target pixels.

In these optional implementations, a pixel corresponding to a scene point whose difference between a first disparity and a second disparity falls within a preset range may be used as a target pixel. The preset range may be set based on empirical or experimental values, for example, may be 1 to 2 pixels. The difference between the first disparity and the second disparity may be the larger of an absolute value of the first disparity and an absolute value of the second disparity minus the smaller. If the difference falls within the preset range, the corresponding pixel may be used as a target pixel, i.e., a pixel having a consistent bidirectional disparity. Accordingly, the target region may be determined based on at least one connected component constituted by the plurality of target pixels. For example, a connected component with a largest area is used as the target region.

When the plurality of pixels in the target region each have a consistent bidirectional disparity, it may be considered that disparity information of the region is more accurate. Determining the target region in which the bidirectional disparity is consistent facilitates calculation of a more accurate absolute depth value.

S130: Determine an absolute depth value of a pixel in the target region based on a bidirectional disparity of the pixel in the target region.

According to the principle of three-dimensional imaging, there may be a relationship between a disparity d and an absolute depth value Z of a pixel as follows: d = ft/Z, where t may represent a distance of a binocular image acquisition device, and f may represent a focal length of the binocular image acquisition device. In this embodiment of the present disclosure, since the pixel in the target region has a consistent bidirectional disparity, any one of the first disparity, the second disparity, a mean of the first disparity and the second disparity, etc., may be used as d to calculate the absolute depth value Z of the pixel. The absolute depth value includes scale information, that is, a distance between an object corresponding to the pixel in the target region and the image acquisition apparatus can be determined. For example, the absolute depth value may be x millimeters, x centimeters, or x meters.

S140: Construct a mapping relationship between a relative depth value and an absolute depth value based on the absolute depth value of the pixel in the target region and a relative depth value of the pixel in the binocular image.

A final relative depth value of each pixel in the target region may be determined based on respective relative depth values of each pixel in the target region in the left-eye image and the right-eye image. For example, a mean or weighted value of the relative depth values of each pixel in the target region in the left-eye image and the right-eye image may be used as the final relative depth value of each pixel in the target region.

Accordingly, the mapping relationship between a relative depth value and an absolute depth value may be constructed based on the final relative depth value and the absolute depth value of the pixel in the target region. The final relative depth value and the absolute depth value of the pixel in the target region have a positive correlation mapping relationship. A plurality of candidate mapping relationships conforming to the law of mapping from a relative depth value to an absolute depth value may be preset by experience or experiment. For example, a positive correlation linear mapping relationship, logarithmic mapping relationship, and the like are preset. Then, final relative depth values and absolute depth values of the plurality of pixels in the target region may be substituted into these candidate mapping relationships respectively, and a candidate mapping relationship with a highest degree of fitting may be used as the mapping relationship between a relative depth value and an absolute depth value.

In some optional implementations, constructing the mapping relationship between a relative depth value and an absolute depth value based on the absolute depth value of the pixel in the target region and the relative depth value of the pixel in the binocular image may further include: performing function fitting using the absolute depth values of the plurality of pixels in the target region as dependent variables and relative depth values of the corresponding pixels in the binocular image as independent variables; and using a result of the function fitting as the mapping relationship between a relative depth value and an absolute depth value.

In these optional implementations, using the relative depth values of the plurality of pixels in the target region in the binocular image as the independent variables may be using final relative depth values of the plurality of pixels in the target region as the independent variables. The function fitting from the independent variables to the dependent variables may be performed on the final relative depth values and the absolute depth values using an existing fitting tool (such as MATLAB), and the obtained fitting result may be used as the mapping relationship. As such, a mapping relationship best fitting the mapping relationship between a relative depth value and an absolute depth value in the current binocular image can be obtained without presetting the candidate mapping relationship, improving the accuracy of depth estimation for different binocular images.

It is proved by many experiments that mapping from a relative depth value to an absolute depth value generally conforms to the positive correlation linear mapping relationship. To improve the efficiency of determining the mapping relationship, after the final relative depth values and the absolute depth values of the plurality of pixels in the target region are determined, a proportionality coefficient may further be determined based on the plurality of final relative depth values and the corresponding absolute depth values, so that a product of the final relative depth value and the proportionality coefficient is equal to the absolute depth value.

S150: Determine, based on the mapping relationship and a relative depth value of a pixel to be determined in the binocular image, an absolute depth value of the pixel to be determined in the binocular image.

The mapping relationship determined based on the relative depth values and the absolute depth values of the plurality of pixels in the target region is more accurate, and can be used for mapping from relative depth values to absolute depth values of all pixels in the binocular image. A final relative depth value of each pixel in the binocular image may be determined, and an absolute depth value of each pixel in the binocular image may be obtained by substituting the final relative depth value into the mapping relationship. In this step, since the absolute depth value of the pixel in the target region has been determined, only a final relative depth value of a pixel in another region other than the target region in the binocular image is determined, and the final relative depth value is substituted into the mapping relationship to obtain an absolute depth value of the pixel in the another region. As such, the efficiency of determining the absolute depth value can be improved to some extent.

In some optional implementations, obtaining the relative depth values of the plurality of pixels in the binocular image may include: processing the binocular image using a monocular depth estimation model, to obtain the relative depth values of the plurality of pixels in the binocular image, where supervisory information in a training process of the monocular depth estimation model may include an absolute depth value of a pixel in a target region of a sample binocular image.

The monocular depth estimation model may be considered as a deep learning model. The training process of the monocular depth estimation model may include: obtaining the sample binocular image; obtaining a bidirectional disparity of the same scene point in the sample binocular image, and determining a target region in which the bidirectional disparity is consistent; and determining the absolute depth value of the pixel in the target region of the sample binocular image based on a bidirectional disparity of the pixel in the target region of the sample binocular image. The absolute depth value determined based on disparity information of the target region of the sample binocular image is more accurate.

Since the absolute depth value can also reflect a distance relationship of an object represented by the pixel, the absolute depth value of the pixel in the target region of the sample binocular image may be used as the supervisory information to train the monocular depth estimation model. That is, after the absolute depth value of the pixel in the target region of the sample binocular image is determined, the training process of the monocular depth estimation model may further include: processing the sample binocular image using the monocular depth estimation model, to obtain a relative depth value of the pixel in the sample binocular image; and determining and backpropagating an error between the relative depth value and the absolute depth value of the pixel in the target region of the sample binocular image, so as to train the monocular depth estimation model. In determining the error between the relative depth value and the absolute depth value of the pixel in the target region in the sample binocular image, for example, a distribution dispersion degree of the relative depth value and the absolute depth value of the pixel in the target region of the sample binocular image may be used as the error. For another example, the relative depth value of the pixel in the target region of the sample binocular image may be multiplied by a preset proportionality coefficient, and a difference between a value obtained from the multiplication by the proportionality coefficient and the absolute depth value is used as the error. Moreover, other methods for calculating the error are also applicable here, which are not exhausted herein.

In these optional implementations, the error in the training process of the monocular depth estimation model is determined using the absolute depth value of the pixel in the target region of the sample binocular image as the supervisory information, so that the estimation accuracy of the monocular depth estimation model can be improved. After the training is completed, the monocular depth estimation model may be configured to estimate the relative depth of the pixel in the binocular image.

In some optional implementations, obtaining the bidirectional disparity of the same scene point in the binocular image may include: processing the binocular image using an optical flow estimation model, to obtain the bidirectional disparity of the same scene point in the binocular image, where supervisory information in a training process of the optical flow estimation model includes a bidirectional disparity of a same scene point in another region other than a target region in a sample binocular image.

The optical flow estimation model may also be considered as a deep learning model. The training process of the optical flow estimation model may include: obtaining the sample binocular image; obtaining relative depth values of a plurality of pixels in the sample binocular image; inputting the sample binocular image into the optical flow estimation model; processing the sample binocular image using the optical flow estimation model, to obtain a bidirectional disparity of the same scene point in the sample binocular image; and determining the target region in which the bidirectional disparity is consistent, and determining the another region other than the target region in the sample binocular image. Disparity information of the another region is not so accurate, and the disparity information may be optimized to obtain a more effective optical flow estimation model through training.

After the another region of the sample binocular image is determined, the training process of the optical flow estimation model may further include: determining an absolute depth value based on a relative depth value of a pixel in the another region of the sample binocular image; determining a standard disparity of the pixel in the another region based on the absolute depth value of the pixel in the another region; and determining and backpropagating an error between the bidirectional disparity of the same scene point in the another region of the sample binocular image and the standard disparity, so as to train the optical flow estimation model. In determining the error between the bidirectional disparity of the same scene point in the another region of the sample binocular image and the standard disparity, for example, a difference between a first disparity corresponding to the another region of the sample binocular image and the standard disparity is calculated, a difference between a second disparity corresponding to the another region of the sample binocular image and the standard disparity is calculated, and the error is determined based on the two differences, for example, a mean or weighted value of the two differences is used as the error.

In these optional implementations, the error in the training process of the optical flow estimation model is determined using the error between the bidirectional disparity of the same scene point in the another region other than the target region of the sample binocular image and the standard disparity as the supervisory information, so that a more accurate optical flow estimation model can be obtained. After the training is completed, the optical flow estimation model may be configured to estimate the bidirectional disparity of the same scene point in the binocular image.

In the technical solution of this embodiment of the present disclosure, the relative depth values of the pixels in the binocular image are obtained. The bidirectional disparity of the same scene point in the binocular image is obtained, and the target region in which the bidirectional disparity is consistent is determined. The absolute depth value of the pixel in the target region is determined based on the bidirectional disparity of the pixel in the target region. The mapping relationship between a relative depth value and an absolute depth value is constructed based on the absolute depth value of the pixel in the target region and the relative depth value of the pixel in the binocular image. The absolute depth value of the pixel to be determined in the binocular image is determined based on the mapping relationship and the relative depth value of the pixel to be determined in the binocular image.

It may be considered that the disparity information of the target region of the binocular image in which the bidirectional disparity is consistent is more accurate, and the absolute depth value determined based on the disparity information of the target region is also more accurate. The mapping relationship between an absolute depth and a relative depth in the target region is constructed, and all the relative depth values of the whole image can be mapped to the absolute depth values using the mapping relationship, to implement depth estimation for a plurality of portions of the whole image.

This embodiment of the present disclosure may be combined with the optional solutions of the image depth estimation method provided in the above embodiment. The image depth estimation method provided in this embodiment is applicable to depth estimation for a binocular video. According to the image depth estimation method provided in this embodiment of the present disclosure, an absolute depth value of a pixel in a current binocular video frame and an absolute depth value of a pixel in a next binocular video frame may be determined. In addition, since the current binocular video frame and the next binocular video frame are temporally consecutive, the absolute depth value in the current binocular video frame may be propagated backward to the next binocular video frame based on a temporal disparity from the current binocular video frame to the next binocular video frame, to correct the absolute depth value of the pixel in the next binocular video frame. Therefore, the accuracy of estimating the absolute depth value of the pixel in the next binocular video frame can be improved.

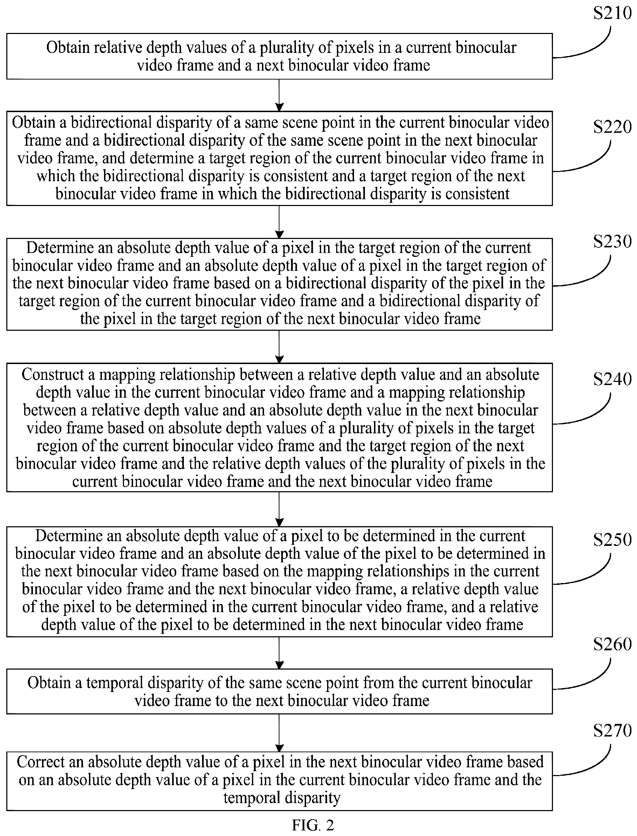

FIG. 2 is a schematic flowchart of an image depth estimation method according to an embodiment of the present disclosure. As shown in FIG. 2, in the image depth estimation method provided in this embodiment, a binocular image may include a binocular video frame. The method may include the following steps.

S210: Obtain relative depth values of a plurality of pixels in a current binocular video frame and a next binocular video frame.

In this embodiment, the binocular video frame may be any video frame in a binocular video file, and the binocular video file may be a video stream acquired in real time or a video file prestored locally. The method provided in this embodiment can be used for processing the binocular video file frame by frame.

L_K may be used to represent a left-eye video frame of the current binocular video frame. R_K may be used to represent a right-eye video frame of the current binocular video frame. L_K+1 may be used to represent a left-eye video frame of the next binocular video frame. R_K+1 may be used to represent a right-eye video frame of the next binocular video frame.

Relative depth values of a plurality of pixels in L_K, R_K, L_K+1, and R_K+1 may be obtained by reading from a preset storage space, determining in real time, or other optional methods. For example, L_K, R_K, L_K+1, and R_K+1 may be processed using a trained monocular depth estimation model, to obtain the relative depth values of the plurality of pixels in L_K, R_K, L_K+1, and R_K+1.

S220: Obtain a bidirectional disparity of a same scene point in the current binocular video frame and a bidirectional disparity of the same scene point in the next binocular video frame, and determine a target region of the current binocular video frame in which the bidirectional disparity is consistent and a target region of the current binocular video frame in which the bidirectional disparity is consistent.

There is no strict sequential time order between step S220 and step S210. In step S220, bidirectional disparities of the same scene point between L_K and R_K and between L_K+1 and R_K+1 may be obtained also by reading a predetermined bidirectional disparity from the preset storage space, determining in real time, or other optional methods. For example, images of L_K and R_K and images of L_K+1 and R_K+1. may be processed using a trained optical flow estimation model, to obtain a disparity of the same scene point from L_K to R_K, a disparity from R_K to L_K, a disparity from L_K+1 to R_K+1, and a disparity from R_K+1 to L_K+1.

The disparity from L_K to R_K may be referred to as a first disparity in the current binocular video frame. The disparity from R_K to L_K may be referred to as a second disparity in the current binocular video frame. The disparity from L_K+1 to R_K+1 may be referred to as a first disparity in the next binocular video frame. The disparity from R_K+1 to L_K+1 may be referred to as a second disparity in the next binocular video frame. In addition, a pixel, whose difference between a first disparity and a second disparity falls within a preset range, in the current binocular video frame may be used as a target pixel, and the target region of the current binocular video frame is determined based on the target pixel. Similarly, a pixel, whose difference between a first disparity and a second disparity falls within the preset range, in the next binocular video frame may be used as a target pixel, and the target region of the next binocular video frame is determined based on the target pixel.

S230: Determine an absolute depth value of a pixel in the target region of the current binocular video frame and an absolute depth value of a pixel in the target region of the next binocular video frame based on a bidirectional disparity of the pixel in the target region of the current binocular video frame and a bidirectional disparity of the pixel in the target region of the next binocular video frame.

In this embodiment, according to the principle of three-dimensional imaging, the absolute depth value of the pixel in the target region of the current binocular video frame may be determined based on the bidirectional disparity of the pixel in the target region of the current binocular video frame; and the absolute depth value of the pixel in the target region of the next binocular video frame may be determined based on the bidirectional disparity of the pixel in the target region of the next binocular video frame.

S240: Construct a mapping relationship between a relative depth value and an absolute depth value in the current binocular video frame and a mapping relationship between a relative depth value and an absolute depth value in the next binocular video frame based on absolute depth values of a plurality of pixels in the target region of the current binocular video frame and the target region of the next binocular video frame and the relative depth values of the plurality of pixels in the current binocular video frame and the next binocular video frame.

In this embodiment, the mapping relationship between a relative depth value and an absolute depth value in the current binocular video frame may be constructed based on absolute depth values of a plurality of pixels in the target region of the current binocular video frame and relative depth values of the plurality of pixels in the target region of the current binocular video frame. In addition, the mapping relationship between a relative depth value and an absolute depth value in the next binocular video frame may be constructed based on absolute depth values of a plurality of pixels in the target region of the next binocular video frame and relative depth values of the plurality of pixels in the target region of the next binocular video frame.

S250: Determine an absolute depth value of a pixel to be determined in the current binocular video frame and an absolute depth value of the pixel to be determined in the next binocular video frame based on the mapping relationships in the current binocular video frame and the next binocular video frame, a relative depth value of the pixel to be determined in the current binocular video frame, and a relative depth value of the pixel to be determined in the next binocular video frame.

In this embodiment, the absolute depth value of the pixel to be determined in the current binocular video frame may be determined by substituting the relative depth value of the pixel to be determined in the current binocular video frame into the mapping relationship in the current binocular video frame. In addition, the absolute depth value of the pixel to be determined in the next binocular video frame may be determined by substituting the relative depth value of the pixel to be determined in the next binocular video frame into the mapping relationship in the next binocular video frame.

S260: Obtain a temporal disparity of the same scene point from the current binocular video frame to the next binocular video frame.

There is no strict sequential time order between step S260 and steps S210 to S250. In step S260, a temporal disparity of the same scene point from L_K to L_K+1 and a temporal disparity from R_K to R_K+1. may be obtained also by reading a predetermined temporal disparity from the preset storage space, determining in real time, or other optional methods. For example, the images of L_K and L_K+1 and the images of R_K and R_K+1 may be processed also using the trained optical flow estimation model, to obtain the temporal disparity of the same scene point from L_K to L_K+1 and the temporal disparity from R_K to R_K+1.

S270: Correct an absolute depth value of a pixel in the next binocular video frame based on an absolute depth value of a pixel in the current binocular video frame and the temporal disparity.

Since an object corresponding to the pixels is temporally and spatially consecutive between adjacent video frames, the absolute depth value of the pixel in the current binocular video frame may be used to correct the absolute depth value of the corresponding pixel in the next binocular video frame. Therefore, the accuracy of the absolute depth value of the pixel in the next binocular video frame can be improved.

In some optional implementations, correcting the absolute depth value of the pixel in the next binocular video frame based on the absolute depth value of the pixel in the current binocular video frame and the temporal disparity may include: determining a temporal estimated value of an absolute depth of the pixel in the next binocular video frame based on the absolute depth value of the pixel in the current binocular video frame and the temporal disparity; and performing weighted smoothing on the absolute depth value of the pixel in the next binocular video frame based on the temporal estimated value.

In these optional implementations, the pixel in the current binocular video frame may be displaced based on the temporal disparity of the same scene point from L_K to L_K+1 and the temporal disparity from R_K to R_K+1, so as to determine the corresponding pixel in the next binocular video frame. Accordingly, the absolute depth value of the pixel in the current binocular video frame may be propagated backward to the corresponding pixel in the next binocular video frame, so as to estimate the absolute depth value of the corresponding pixel in the next binocular video frame, i.e., to obtain the temporal estimated value of the absolute depth of the pixel in the next binocular video frame. A weighted sum of the temporal estimated value of the absolute depth of the pixel in the next binocular video frame and the absolute depth value, determined in step S250, of the pixel to be determined in the next binocular video frame may be calculated, so as to perform temporal smoothing correction processing on the absolute depth value, determined in step S250, of the pixel to be determined in the next binocular video frame, to obtain a more accurate absolute depth value of the pixel in the next binocular video frame.

In addition, after the temporal estimated value of the absolute depth of the corresponding pixel in the next binocular video frame is determined based on the absolute depth value of the pixel in the current binocular video frame and the temporal disparity, the absolute depth value of the pixel in the next binocular video frame may be corrected based on a distribution of the temporal estimated value of the corresponding pixel, so as to cause a distribution of the absolute depth value of the pixel in the next binocular video frame to approach the distribution of the temporal estimated value. Understandably, other methods for correcting the absolute depth value of the pixel in the next binocular video frame are also applicable here, which are not exhausted herein.

In some practical applications, the binocular video frame may come from a virtual reality (VR) binocular video. According to the image depth estimation method provided in this embodiment of the present disclosure, an absolute depth value of a frame pixel in the VR binocular video may be determined, which facilitates implementation of subsequent services such as the addition of special effects to the VR binocular video and helps improve viewing experience of a user who is watching the video.

The technical solution of this embodiment of the present disclosure is applicable to depth estimation for a binocular video. According to the image depth estimation method provided in this embodiment of the present disclosure, the absolute depth value of the pixel in the current binocular video frame and the absolute depth value of the pixel in the next binocular video frame may be determined. In addition, since the current binocular video frame and the next binocular video frame are temporally consecutive, the absolute depth value in the current binocular video frame may be propagated backward to the next binocular video frame based on the temporal disparity from the current binocular video frame to the next binocular video frame, to correct the absolute depth value of the pixel in the next binocular video frame. Therefore, the accuracy of the absolute depth value of the pixel in the next binocular video frame can be improved. The image depth estimation method provided in this embodiment of the present disclosure and the image depth estimation method provided in the above embodiment belong to the same concept. For the technical details not described in detail in this embodiment, reference can be made to the above embodiment, and the same technical features have the same effects in this embodiment and the above embodiment.

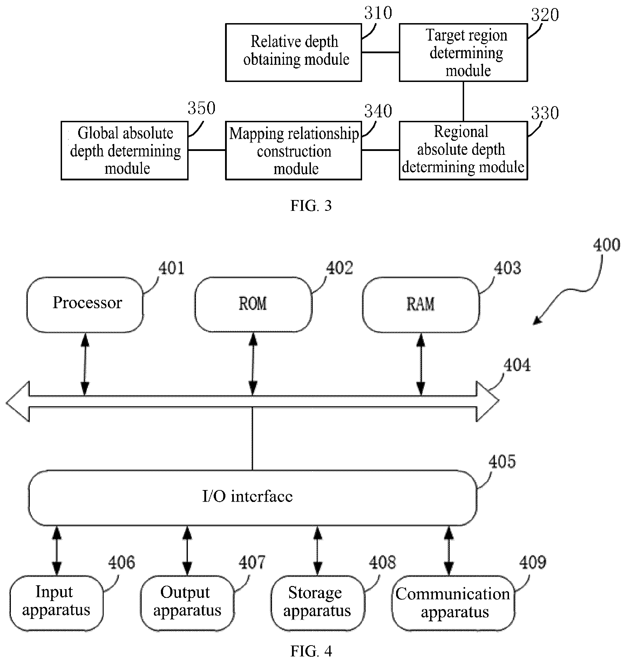

FIG. 3 is a schematic diagram of a structure of an image depth estimation apparatus according to an embodiment of the present disclosure. The image depth estimation apparatus provided in this embodiment of the present disclosure is applicable to the case of whole-image depth estimation for a binocular image.

As shown in FIG. 3, the image depth estimation apparatus provided in this embodiment of the present disclosure may include:
a relative depth obtaining module 310 configured to obtain relative depth values of a plurality of pixels in a binocular image;
a target region determining module 320 configured to obtain a bidirectional disparity of a same scene point in the binocular image, and determine a target region in which the bidirectional disparity is consistent;
a regional absolute depth determining module 330 configured to determine an absolute depth value of a pixel in the target region based on a bidirectional disparity of the pixel in the target region;
a mapping relationship construction module 340 configured to construct a mapping relationship between a relative depth value and an absolute depth value based on the absolute depth value of the pixel in the target region and a relative depth value of the pixel in the binocular image; and
a global absolute depth determining module 350 configured to determine, based on the mapping relationship and a relative depth value of a pixel to be determined in the binocular image, an absolute depth value of the pixel to be determined in the binocular image.

In some optional implementations, the relative depth obtaining module may be configured to:
process the binocular image using a monocular depth estimation model, to obtain the relative depth values of the plurality of pixels in the binocular image,
where supervisory information in a training process of the monocular depth estimation model includes an absolute depth value of a pixel in a target region of a sample binocular image.

In some optional implementations, the target region determining module may be configured to:
process the binocular image using an optical flow estimation model, to obtain the bidirectional disparity of the same scene point in the binocular image,
where supervisory information in a training process of the optical flow estimation model includes a bidirectional disparity of a same scene point in another region other than a target region in a sample binocular image.

In some optional implementations, the target region determining module may be configured to:
determine a target pixel based on the bidirectional disparity, where the bidirectional disparity includes a first disparity and a second disparity, the first disparity is a disparity of the same scene point from a left-eye image to a right-eye image, and the second disparity is a disparity of the same scene point from the right-eye image to the left-eye image; and
determine the target region based on a plurality of target pixels.

In some optional implementations, the mapping relationship construction module may be configured to:
perform function fitting using the absolute depth values of the plurality of pixels in the target region as dependent variables and relative depth values of the corresponding pixels in the binocular image as independent variables; and
use a result of the function fitting as the mapping relationship between a relative depth value and an absolute depth value.

In some optional implementations, the binocular image may include a binocular video frame.

Accordingly, the image depth estimation apparatus may further include:
a temporal disparity determining module configured to determine a temporal disparity of the same scene point from a current binocular video frame to a next binocular video frame.

The global absolute depth determining module may further be configured to: after an absolute depth value of a pixel in the current binocular video frame and an absolute depth value of a pixel in the next binocular video frame are determined, correct the absolute depth value of the pixel in the next binocular video frame based on the absolute depth value of the pixel in the current binocular video frame and the temporal disparity.

In some optional implementations, the global absolute depth determining module may be configured to:
determine a temporal estimated value of an absolute depth of the pixel in the next binocular video frame based on the absolute depth value of the pixel in the current binocular video frame and the temporal disparity; and
perform weighted smoothing on the absolute depth value of the pixel in the next binocular video frame based on the temporal estimated value.

The image depth estimation apparatus provided in this embodiment of the present disclosure can perform the image depth estimation method provided in any embodiment of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, names of the functional units are merely used for mutual distinguishing, and are not used to limit the protection scope of the embodiments of the present disclosure.

Reference is made to FIG. 4 below. FIG. 4 is a schematic diagram of a structure of an electronic device (such as a terminal device or a server in FIG. 4) 400 suitable for implementing an embodiment of the present disclosure. The electronic device in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in FIG. 4 is merely an example, and shall not impose any limitation on the function and scope of use of the embodiments of the present disclosure.

As shown in FIG. 4, the electronic device 400 may include a processor (e.g., a central processor and a graphics processor) 401, and the processor 401 may perform a variety of appropriate actions and processing in accordance with a program stored in a read-only memory (ROM) 402 or a program loaded from a storage apparatus 408 into a random-access memory (RAM) 403. The RAM 403 further stores various programs and data required for the operation of the electronic device 400. The processing apparatus 401, the ROM 402, and the RAM 403 are connected to each other through a bus 404. An input/output (I/O) interface 405 is also connected to the bus 404.

Generally, the following apparatuses may be connected to the I/O interface 405: an input apparatus 406 including, for example, a touchscreen, a touchpad, a keyboard, a mouse, a camera, a microphone, an accelerometer, and a gyroscope; an output apparatus 407 including, for example, a liquid crystal display (LCD), a speaker, and a vibrator; the storage apparatus 408 including, for example, a tape and a hard disk; and a communication apparatus 409. The communication apparatus 409 may allow the electronic device 400 to perform wireless or wired communication with other devices to exchange data. Although FIG. 4 shows the electronic device 400 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 409, installed from the storage apparatus 408, or installed from the ROM 402. When the computer program is executed by the processor 401, the above functions defined in the image depth estimation method of the embodiment of the present disclosure are performed.

The electronic device provided in this embodiment of the present disclosure and the image depth estimation method provided in the above embodiment belong to the same concept. For the technical details not described in detail in this embodiment, reference can be made to the above embodiment, and this embodiment and the above embodiment have the same effects.

An embodiment of the present disclosure provides a computer-readable storage medium storing a computer program thereon, where when executed by a processor, the program causes the image depth estimation method provided in the above embodiment to be implemented.

It should be noted that the above computer-readable storage medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. Examples of the computer-readable storage medium may include, but are not limited to: an electrical connection having at least one wire, a portable computer magnetic disk, a hard disk, a random access memory (RAM), a read-only memory (ROM), an erasable programmable read-only memory (EPROM) or a flash memory (FLASH), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable storage medium other than the computer-readable storage medium. The computer-readable signal medium can send, propagate, or transmit a program used by or in combination with an instruction execution system, apparatus, or device. The program code contained in the computer-readable storage medium may be transmitted by any suitable medium, including but not limited to: electric wires, optical cables, radio frequency (RF), etc., or any suitable combination thereof.

In some implementations, a client and a server can communicate using any currently known or future-developed network protocol such as a Hypertext Transfer Protocol (HTTP), and may be connected to digital data communication (for example, communication network) in any form or medium. Examples of the communication network include a local area network (LAN), a wide area network (WAN), an internetwork (for example, the Internet), a peer-to-peer network (for example, an ad hoc peer-to-peer network), and any currently known or future-developed network.

The above computer-readable storage medium may be contained in the above electronic device. Alternatively, the computer-readable medium may exist independently, without being assembled into the electronic device.

The above computer-readable medium carries at least one program, and the at least one program, when executed by the electronic device, causes the electronic device to perform the following:
obtaining relative depth values of pixels in a binocular image; obtaining a bidirectional disparity of a same scene point in the binocular image, and determining a target region in which the bidirectional disparity is consistent; determining absolute depth values of pixels in the target region based on bidirectional disparities of the pixels in the target region; constructing a mapping relationship between a relative depth value and an absolute depth value based on the absolute depth values of the pixels in the target region and relative depth values of the pixels in the binocular image; and determining, based on the mapping relationship and the relative depth values of the pixels in the binocular image, absolute depth values of the pixels in the binocular image.

Computer program code for performing operations of the present disclosure can be written in at least one programming language or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains at least one executable instruction for implementing the specified logical functions. It should also be noted that in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and the flowchart, and a combination of the blocks in the block diagram and the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The names of the units and the modules do not constitute a limitation on the units and the modules themselves.

The functions described herein above may be performed at least partially by at least one hardware logic component. For example, without limitation, exemplary types of hardware logic components that may be used include: a field-programmable gate array (FPGA), an application-specific integrated circuit (ASIC), an application-specific standard part (ASSP), a system on chip (SOC), a complex programmable logic device (CPLD), and the like.

In the context of the present disclosure, a machine-readable storage medium may be a tangible medium that may contain or store a program used by or in combination with an instruction execution system, apparatus, or device. The machine-readable storage medium may be a machine-readable signal medium or a machine-readable storage medium. The machine-readable storage medium may include, but is not limited to, electronic, magnetic, optical, electromagnetic, infrared, or semiconductor systems, apparatuses, or devices, or any suitable combination thereof. Examples of the machine-readable storage medium may include an electrical connection based on at least one wire, a portable computer disk, a hard disk, a random access memory (RAM), a read-only memory (ROM), an erasable programmable read-only memory (EPROM), a flash memory, an optic fiber, a portable compact disk read-only memory (CD-ROM), an optical storage device, a magnetic storage device, or any suitable combination thereof.

According to one or more embodiments of the present disclosure, an image depth estimation method is provided. The method includes:
obtaining relative depth values of a plurality of pixels in a binocular image;
obtaining a bidirectional disparity of a same scene point in the binocular image, and determining a target region in which the bidirectional disparity is consistent;
determining an absolute depth value of a pixel in the target region based on a bidirectional disparity of the pixel in the target region;
constructing a mapping relationship between a relative depth value and an absolute depth value based on the absolute depth value of the pixel in the target region and a relative depth value of the pixel in the binocular image; and
determining, based on the mapping relationship and a relative depth value of a pixel to be determined in the binocular image, an absolute depth value of the pixel to be determined in the binocular image.

According to one or more embodiments of the present disclosure, the image depth estimation method is provided, further including the following:

In some optional implementations, the obtaining relative depth values of a plurality of pixels in a binocular image includes:
processing the binocular image using a monocular depth estimation model, to obtain the relative depth values of the plurality of pixels in the binocular image,
where supervisory information in a training process of the monocular depth estimation model includes an absolute depth value of a pixel in a target region of a sample binocular image.

According to one or more embodiments of the present disclosure, the image depth estimation method is provided, further including the following:

In some optional implementations, the obtaining a bidirectional disparity of a same scene point in the binocular image includes:
processing the binocular image using an optical flow estimation model, to obtain the bidirectional disparity of the same scene point in the binocular image,
where supervisory information in a training process of the optical flow estimation model includes a bidirectional disparity of a same scene point in another region other than a target region in a sample binocular image.

According to one or more embodiments of the present disclosure, the image depth estimation method is provided, further including the following:

In some optional implementations, the determining a target region in which bidirectional disparity is consistent includes:
determining a target pixel based on the bidirectional disparity, where the bidirectional disparity includes a first disparity and a second disparity, the first disparity is a disparity of the same scene point from a left-eye image to a right-eye image, and the second disparity is a disparity of the same scene point from the right-eye image to the left-eye image; and
determining the target region based on a plurality of target pixels.

According to one or more embodiments of the present disclosure, the image depth estimation method is provided, further including the following:

In some optional implementations, the constructing a mapping relationship between a relative depth value and an absolute depth value based on the absolute depth value of the pixel in the target region and a relative depth value of the pixel in the binocular image includes:
performing function fitting using absolute depth values of a plurality of pixels in the target region as dependent variables and relative depth values of the corresponding pixels in the binocular image as independent variables; and
using a result of the function fitting as the mapping relationship between a relative depth value and an absolute depth value.

According to one or more embodiments of the present disclosure, the image depth estimation method is provided, further including the following:

In some optional implementations, the binocular image includes a binocular video frame.

Accordingly, after an absolute depth value of a pixel in a current binocular video frame and an absolute depth value of a pixel in a next binocular video frame are determined, the method further includes:
determining a temporal disparity of the same scene point from the current binocular video frame to the next binocular video frame; and
correcting the absolute depth value of each pixel in the next binocular video frame based on the absolute depth value of the pixel in the current binocular video frame and the temporal disparity.

According to one or more embodiments of the present disclosure, the image depth estimation method is provided, further including the following:

In some optional implementations, the correcting the absolute depth value of the pixel in the next binocular video frame based on the absolute depth value of the pixel in the current binocular video frame and the temporal disparity includes:
determining a temporal estimated value of an absolute depth of the pixel in the next binocular video frame based on the absolute depth value of the pixel in the current binocular video frame and the temporal disparity; and
performing weighted smoothing on the absolute depth value of the pixel in the next binocular video frame based on the temporal estimated value.

According to one or more embodiments of the present disclosure, an image depth estimation apparatus is provided. The apparatus includes:
a relative depth obtaining module configured to obtain relative depth values of a plurality of pixels in a binocular image;
a target region determining module configured to obtain a bidirectional disparity of a same scene point in the binocular image, and determine a target region in which the bidirectional disparity is consistent;
a regional absolute depth determining module configured to determine an absolute depth value of each pixel in the target region based on a bidirectional disparity of the pixel in the target region;
a mapping relationship construction module configured to construct a mapping relationship between a relative depth value and an absolute depth value based on the absolute depth value of the pixel in the target region and a relative depth value of the pixel in the binocular image; and
a global absolute depth determining module configured to determine, based on the mapping relationship and a relative depth value of a pixel to be determined in the binocular image, an absolute depth value of the pixel to be determined in the binocular image.

## Claims

1. An image depth estimation method, comprising:
obtaining relative depth values of a plurality of pixels in a binocular image;
obtaining a bidirectional disparity of a same scene point in the binocular image, and determining a target region in which the bidirectional disparity is consistent;
determining an absolute depth value of a pixel in the target region based on a bidirectional disparity of the pixel in the target region;
constructing a mapping relationship between a relative depth value and an absolute depth value based on the absolute depth value of the pixel in the target region and a relative depth value of the pixel in the binocular image; and
determining, based on the mapping relationship and a relative depth value of a pixel to be determined in the binocular image, an absolute depth value of the pixel to be determined in the binocular image.

2. The method according to claim 1, wherein the obtaining relative depth values of a plurality of pixels in a binocular image comprises:
processing the binocular image using a monocular depth estimation model, to obtain the relative depth values of the plurality of pixels in the binocular image,
wherein supervisory information in a training process of the monocular depth estimation model comprises an absolute depth value of a pixel in a target region of a sample binocular image.

3. The method according to claim 1, wherein the obtaining a bidirectional disparity of a same scene point in the binocular image comprises:
processing the binocular image using an optical flow estimation model, to obtain the bidirectional disparity of the same scene point in the binocular image,
wherein supervisory information in a training process of the optical flow estimation model comprises a bidirectional disparity of a same scene point in another region other than a target region in a sample binocular image.

4. The method according to claim 1, wherein the determining a target region in which the bidirectional disparity is consistent comprises:
determining a target pixel based on the bidirectional disparity, wherein the bidirectional disparity comprises a first disparity and a second disparity, the first disparity is a disparity of the same scene point from a left-eye image to a right-eye image, and the second disparity is a disparity of the same scene point from the right-eye image to the left-eye image; and
determining the target region based on a plurality of target pixels.

5. The method according to claim 1, wherein the constructing a mapping relationship between a relative depth value and an absolute depth value based on the absolute depth value of the pixel in the target region and a relative depth value of the pixel in the binocular image comprises:
performing function fitting using absolute depth values of a plurality of pixels in the target region as dependent variables and relative depth values of the corresponding pixels in the binocular image as independent variables; and
using a result of the function fitting as the mapping relationship between a relative depth value and an absolute depth value.

6. The method according to any one of claims 1 to 5, wherein the binocular image comprises a binocular video frame; and
accordingly, after an absolute depth value of a pixel in a current binocular video frame and an absolute depth value of a pixel in a next binocular video frame are determined, the method further comprises:
determining a temporal disparity of the same scene point from the current binocular video frame to the next binocular video frame; and
correcting the absolute depth value of the pixel in the next binocular video frame based on the absolute depth value of the pixel in the current binocular video frame and the temporal disparity.

7. The method according to claim 6, wherein the correcting the absolute depth value of the pixel in the next binocular video frame based on the absolute depth value of the pixel in the current binocular video frame and the temporal disparity comprises:
determining a temporal estimated value of an absolute depth of the pixel in the next binocular video frame based on the absolute depth value of the pixel in the current binocular video frame and the temporal disparity; and
performing weighted smoothing on the absolute depth value of the pixel in the next binocular video frame based on the temporal estimated value.

8. An image depth estimation apparatus, comprising:
a relative depth obtaining module configured to obtain relative depth values of a plurality of pixels in a binocular image;
a target region determining module configured to obtain a bidirectional disparity of a same scene point in the binocular image, and determine a target region in which the bidirectional disparity is consistent;
a regional absolute depth determining module configured to determine an absolute depth value of a pixel in the target region based on a bidirectional disparity of the pixel in the target region;
a mapping relationship construction module configured to construct a mapping relationship between a relative depth value and an absolute depth value based on the absolute depth value of the pixel in the target region and a relative depth value of the pixel in the binocular image; and
a global absolute depth determining module configured to determine, based on the mapping relationship and a relative depth value of a pixel to be determined in the binocular image, an absolute depth value of the pixel to be determined in the binocular image.

9. An electronic device, comprising:
at least one processor; and
a storage apparatus configured to store at least one program, wherein
the at least one program, when executed by the at least one processor, causes the at least one processor to implement the image depth estimation method according to any one of claims 1 to 7.

10. A storage medium comprising computer-executable instructions that, when executed by a computer processor, cause the image depth estimation method according to any one of claims 1 to 7 to be performed.
